# EUROPEAN PATENT APPLICATION

(11) **EP 4 628 275 A1**
(43) Date of publication of application: **08.10.2025**
(21) Application number: 25164526.3
(22) Date of filing: 18.03.2025
(51) Int. Cl.: B29C 33/06, B29C 43/46, B29C 33/02, B29C 43/52, B29B 13/02, B29B 13/04, B29C 35/08, B29C 33/04, B29C 35/02

(54) **A SYSTEM FOR THERMOREGULATING METAL ROTATING CYLINDERS IN PLASTIC FILM CONVERTING AND EXTRUDING SYSTEMS BY MEANS OF INDUCTION HEATERS**

(30) Priority: 05.04.2024 IT 202400007588
(71) Applicant: Colines S.P.A., 28100 Novara (IT)
(72) Inventor: LOMBARDINI, Nicola, 28100 Novara (IT); ZACCHE', Vanni, 28100 Novara (IT)
(74) Representative: Long, Giorgio

(57) **Abstract**

The present invention relates to a system for thermoregulating metal rotating cylinders in applications relating to plastic film converting and extruding systems, consisting of a multitude of raw polymer materials.

In particular, the invention relates to a heating system for a rotating cylinder, e.g., a roller of a calender or a roller of a stretching unit, wherein said heating system is an electromagnetic induction system.

## Description

### Technical field of the invention

The present invention relates to a system for thermoregulating metal rotating cylinders in applications relating to plastic film converting and extruding systems, consisting of a multitude of raw polymer materials.

### Background art

In various industrial applications of the field of transforming plastic materials, the need for heating rotating cylinders is commonplace, and as important as the need for cooling them.

Whereas, in the latter case, the options are substantially obliged to use vector fluids, providing for the extraction of heat, for the heating step the case statistics are potentially wider and more varied.

In fact, as stated, besides the use of vector fluids (water, oil, etc.) that transfer heat to the rotating cylinder in hand, and by conduction to the plastic film in contact therewith, it is also possible to use alternative systems, which are equally (if not more) efficient, such as heaters that utilize infrared technology, for example, as highlighted in patent no. 102016000015563.

However, with reference to the latter patent, it is easy to encounter limitations that can lead to the conclusion that the aforesaid invention is not perfectly suited to the specific purpose.

In particular, given the nature of the heat transmission system (based on radiation) it is apparent how a significant part (if not most) of the efficiency of the infrared-based system is however subject to the absorbance values of the material of which the rotating cylinder is made.

Even more important than the average value of said absorbance (which substantially indicates the capacity of the material to absorb the IR radiation thus increasing the thermal content thereof) is the distribution thereof, or rather, the homogeneity thereof; in fact, it is apparent that any non-homogeneity of this feature (a possibility by no means remote, as the cylinders often consist of calendered and welded sheets) would result in an equally obvious non-homogeneity in the temperature of the cylinder, with manifest repercussions on the consistency of the manufacturing process in which said cylinder would be the main character. Furthermore, additional criticalities can be detected while using IR systems for the internal heating of rotating cylinders:
- the dimensions of the heating spark plugs cannot exceed determined values, especially with regard to the thinness ratio, resulting in excessive fragility of the spark plug itself; therefore, there are limitations to the maximum dimensions obtainable in terms of width of the rotating cylinders, except when dividing the front to be heated into several spark plugs;
- this latter solution also involves compromises, i.e., discontinuities in the joint between the series of spark plugs; an "alternating" arrangement of the spark plugs would also mean the risk of having zones not covered by the resistors or, on the contrary, having double specific power with respect to the rest of the surface, resulting in a further non-homogeneity in the amount of heat provided;
- however, IR spark plugs have an own inertia thereof because even after removing the electric power supply, the transmission of heat by radiation is not interrupted, at least as long as the surface temperature of the heating element remains greater than the surface temperature of the element to be heated; for thermal processes, such as extrusion, in some cases such a response delay can be more than harmful for the success of the process;
- as these heating elements are positioned inside a rotating element and are, amongst other things, characterized by a considerable intrinsic fragility, it is necessary to ensure the safety thereof and protect them from "knocks" originating from external circumstances; this is not easy to achieve in an environment such as that of extrusion plants which, due to their nature (and to the nature of the process in which they are the main characters) often need to fulfil even "traumatic" actions, such as great accelerations and/or decelerations, sudden changes in temperature and/or pressure of the external environment (in this respect, just think of the metallization process of plastic films), etc..

However, it is possible to appreciate the considerable advantages offered by a solution such as that described in patent no. 102016000015563, which have driven to seek an effective solution to the above limitations.

### Summary of the invention

The present invention originates from the evidence that by utilizing a different technology, i.e., that of electromagnetic induction, the heating of metal rotating cylinders can be achieved in order to overcome the aforesaid limits.

In particular, the invention utilizes the magnetic induction technology, which uses an RF generator (radiofrequency) capable of generating a highfrequency electromagnetic wave, spreading into space or into a coaxial cable.

Thereby, it is possible to transfer electric current inside a material and, by utilizing the natural electric resistance of the material, generate heat (Joule effect) therein.

Unlike more conventional technologies, this process provides for the alternate electric current to flow through a coil (or inductor) that, by generating an electromagnetic field as a mirroring image thereof, is capable of transferring the current to another conductive material.

This physical process is better known as electromagnetic induction, or Faraday's law.

A further effect of heating occurs in magnetic materials, offering natural resistance to the quick change in the magnetic fields as a result of the effect of magnetic hysteresis.

In these materials, the magnetic hysteresis produces additional heat that adds to the heating given by the parasite currents. This effect is obtained up to temperatures of less than the Curie point.

It is apparent that by using such a technology, all the above limits relating to the use of IR heaters are brilliantly overcome, since:
- the length of the "heating" element (i.e., a winding of a conductor) is theoretically limitless and especially seamless, i.e., the homogeneity of the "thermal source" is ensured;
- there is no thermal inertia by the heating element, as there is no magnetic field when the electric power supply to the coil is interrupted; this means being able to regulate the temperature of the element to be heated precisely, only having to consider the thermal inertia thereof;
- the system is "intrinsically solid" because, in essence, it has no element that is potentially subject to wear or sensitive to drastic or sudden changes in the surrounding conditions.

The invention thus relates to an induction heating system for a roller, e.g., the roller of a calender, and to the roller comprising such a heating system, as delineated in the appended claims.

More specifically, the invention relates to:
1) a heating system for a rotating cylinder, such as a roller of a calender or a roller of a stretching unit, wherein said heating system is an electromagnetic induction system;
2) a system as in 1, comprising:
   - a coil wound on the internal shaft of the rotating cylinder, which coil is also caused to rotate, wherein the coil is electrically powered by a rotating joint;
   - a coil wound, in a fixed condition, on the internal shaft of the rotating cylinder;
   - a coil wound, in a fixed condition, on the internal shaft of the rotating cylinder, the pitch of which coil for winding the inductor is determined according to thermal homogeneity or desired thermal gradient strategies;
      a plurality of coils (which are also simultaneously or independently rotating or not) wound on the internal shaft of the rotating cylinder, providing for the heating of the related rotating cylinder portion;
3) a system as in 1 or 2, wherein the system comprises cooling means selected from: cooling fluids such as water or oil flowing in a gap of the rotating cylinder; convective motions of air, refrigerated or non-refrigerated, by suction and/or introduction into the rotating cylinder;
4) a system as defined in any one of 1 to 3, wherein the system is thermostated and wherein the temperature detection is carried out by pyrometers in contact with the surfaces to be thermostated, and/or IR temperature detectors for reading the surface temperature of the rotating cylinder or the internal shaft, and/or probes for reading the temperature of the air inside the cylinder or close thereto;
5) a rotating cylinder comprising a system as defined in any one of 1 to 4;
6) a rotating cylinder as in 5, comprising an external cylinder rotatably mounted, e.g., by ball bearings, to an internal shaft which is fixed or rotating in turn, wherein a coil is wound on the internal shaft, the coil being connected to an electric current source for creating the magnetic field by means of an RF generator;
7) a rotating cylinder as in 5 or 6, wherein the external cylinder comprises internal passages, which can form e.g., a serpentine, connected to a refrigerant fluid source;
8) a rotating cylinder as in any one of 5 to 7, wherein the external cylinder comprises lateral sides comprising ball bearings for coupling to the internal shaft, an annular gap being placed between an internal surface of the external cylinder and the internal shaft, and wherein openings are present in the lateral sides, the openings being connected to a suction means or a source of air, refrigerated or non-refrigerated for the extraction or intake of air into the gap, respectively;
9) a machine selected from a calender, a rewinding machine, and a plastic film stretching unit comprising one or more rotating cylinders as defined in any one of 5 to 8.

The structural and functional features of the present invention and the advantages thereof over the prior art will become even more apparent from a discussion of the following description, also referring to the accompanying diagrammatic drawings, showing an embodiment of the finding itself.

### Brief description of the figures

Figure 1 shows a lateral sectional diagrammatic view of an embodiment of the invention;
Figure 2 shows a lateral sectional diagrammatic view of a second embodiment of the invention;
Figure 3 shows a lateral sectional diagrammatic view of a third embodiment of the invention.

### Detailed description of the invention

The present invention firstly relates to a heating system for a rotating cylinder, such as a roller of a calender or a roller of a stretching unit, where said heating system is an electromagnetic induction system.

The methods of installing and applying an induction heating system can vary greatly, the present description limits itself to listing the most common, such as:
- a coil wound on the internal shaft of the rotating cylinder, which coil is also caused to rotate, wherein the coil is electrically powered by a rotating joint;
- a coil wound, in a fixed condition, on the internal shaft of the rotating cylinder;
- a coil wound, in a fixed condition, on the internal shaft of the rotating cylinder, the pitch of which coil for winding the inductor is determined according to thermal homogeneity or desired thermal gradient strategies. Such an opportunity is highly important, for example, when it is necessary or however advantageous to differentiate the temperature of the rotating cylinder in the transverse direction, directly depending in turn on the intensity of the magnetic field created.
   Imagine, for example, a system such as the one described, applied to a machine adapted to longitudinally stretch a plastic film; it is known that in these cases the ends of the rotating cylinders heated using common methods (i.e., those indicated at the start of the description) have difficulty in maintaining the same temperature at the ends due to the natural convective motions which are inevitably caused. In this case, a reduced winding pitch of the coil at the sides of the rotating cylinder with respect to the central zone (with variations in pitch, also gradual variations) can undoubtedly solve the problem at the root, ensuring a greater amount of heat in the zones concerned so as to compensate for the thermal dispersion given by the aforesaid natural convective motions;
- a plurality of coils (which are also simultaneously or independently rotating, or not) wound on the internal shaft of the rotating cylinder, providing for the heating of the related rotating cylinder portion.

Other embodiments can obviously be used without departing from the concept underlying the present invention.

In certain embodiments, the system of the invention provides for a thermostatation of the roller, i.e., the possibility that the roller can alternatively be heated or cooled.

In fact, in certain cases, the need to also provide for the cooling of the rotating cylinder, thus performing an actual thermostatation and not just a mere heating, is known to those skilled in the art. Also in this case, different structural forms and technical solutions can be used, including both cooling fluids, such as water or oil to be flowed into a gap of the rotating cylinder, and simpler systems, but not for this reason less effective, which utilize the convective motions of the air, whether it is refrigerated or not.

In particular, it is possible to use a thermostatation, including an induction heating system and a cooling system for cooling, preferably (but not exclusively), by suction of the air from the gap created between the coil wound on the central shaft of the rotating cylinder (which can be, in turn, rotating or fixed) and the cylinder itself.

However, further embodiments cannot be excluded, for example, referring to the introduction of air previously refrigerated rather than at room temperature or, as anticipated, to fluids conveyed into a gap obtained in the thickness of the same rotating cylinder.

The detection of the temperature for regulating the thermostatation can also occur in the most various structural forms, from pyrometers working in contact with the surfaces to be thermostated, rather than IR temperature detectors which read the surface of the rotating cylinder rather than of the internal shaft, or even probes which determine the temperature of the air inside the cylinder or close thereto.

With reference to the drawings, some embodiments of the invention will now be described in detail.

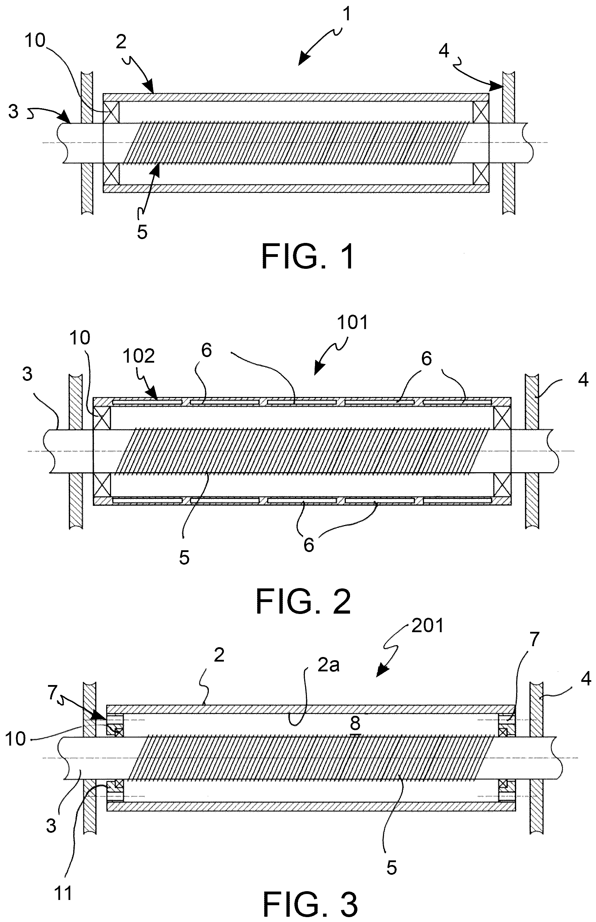

Figure 1 shows a rotating cylinder, indicated as a whole with reference numeral 1, e.g., a roller of a calender or of a stretching unit, comprising an external cylinder 2 rotatably mounted (e.g., by ball bearings 10) to an internal shaft 3 which can be fixed (as in the figure) or rotating in turn. The shaft 3 is mounted to a support structure 4 fixed to the operating unit (not shown) comprising the cylinder 1.

A coil 5 is wound on the internal shaft 3, providing for the creation of the magnetic field by means of an RF generator. Therefore, the coil 5 will be connected to an electric current source (not shown). If the shaft 3 is rotating, the electrical connection of the coil 3 to the source will be made by means of an electric rotating joint.

Figure 2 shows a different embodiment of the invention, where the rotating cylinder 101 is thermostated.

As in the previous embodiment, the rotating cylinder 101 comprises an external cylinder 102 rotatably mounted (e.g., by ball bearings 10) to an internal shaft 3 which can be fixed (as in the figure) or rotating in turn. The shaft 3 is mounted to a support structure 4 fixed to the operating unit (not shown) comprising the cylinder 101.

A coil 5 is wound on the internal shaft 3, providing for the creation of the magnetic field by means of an RF generator. Therefore, the coil 5 will be connected to an electric current source (not shown). If the shaft 3 is rotating, the electrical connection of the coil 3 to the source will be made by means of an electric rotating joint.

The external cylinder 102 comprises internal passages 6 which can form, for example, a serpentine for the passage of a refrigerant fluid as described above. To this end, the internal passages 6 are connected to a refrigerant fluid source (oil, water or other fluid). Also in the embodiment in figure 3, the rotating cylinder 201 comprises an external cylinder 2 rotatably mounted to an internal shaft 3 which can be fixed (as in the figure) or rotating in turn. The shaft 3 is mounted to a support structure 4 fixed to the operating unit (not shown) comprising the cylinder 1.

A coil 5 is wound on the internal shaft 3, providing for the creation of the magnetic field by means of an RF generator. Therefore, the coil 5 will be connected to an electric current source (not shown). If the shaft 3 is rotating, the electrical connection of the coil 3 to the source will be made by means of an electric rotating joint.

The external cylinder 2 comprises lateral sides 11 comprising ball bearings 10 for coupling to the internal shaft 3. An annular gap 8 is placed between the internal surface 2a of the external cylinder 2 and the internal shaft 3. Openings 7 are present in the lateral sides 11 for the extraction or intake of air into the gap 8, again for the purposes of thermostatation of the cylinder 201. To this end, the openings 7 are connected to suction means or to a source of air, refrigerated or non-refrigerated, respectively.

In other embodiments (not shown), the features in figures 2 and 3 can be combined, i.e., both the openings 7 in the lateral sides 11 and the internal passages 6 in the external cylinder 102 can be present.

Furthermore, in both of the above cases, the internal surface 2a of the rotating cylinder can have a geometry comprising a plurality of hollows or ridges, so as to considerably increase the convective thermal exchange area and thus make the air cooling more efficient.

The invention further relates to a calender and/or a rewinder and/or a stretching unit for stretching a plastic film, comprising one or more rotating cylinders having an induction heating system as defined above.

In the aforesaid manner, the invention allows obtaining a quick and efficient thermostatation of the rotating cylinder. In fact, as stated previously, the use of an induction system itself allows immediately interrupting the heating when desired, eliminating the risk of excessively prolonging the heating action. The possible combination of the induction heating with cooling by means of a refrigerant fluid in the internal passages of the external cylinder and/or by suction or introduction of air at a controlled temperature into the annular gap 8, provides a further advantage, thus allowing the required temperature to be reached quickly, also when such a temperature is lower than the temperature previously used. Therefore, an actual thermostatation of the rotating cylinder is obtained.

It is apparent that only some particular embodiments of the present invention have been described, to which those skilled in the art will be able to make all the necessary changes for the adaptation thereof to particular applications, without departing from the scope of protection of the present invention as defined in the appended claims.

## Claims

1. A heating system for a rotating cylinder, such as a roller of a calender or a roller of a stretching unit, wherein said heating system is an electromagnetic induction system.

2. The system according to claim 1, comprising:
- a coil wound on the internal shaft of the rotating cylinder, which shaft is also caused to rotate, wherein the coil is electrically powered by a rotating joint;
- a coil wound, in a fixed condition, on the internal shaft of the rotating cylinder;
- a coil wound, in a fixed condition, on the internal shaft of the rotating cylinder, the pitch of which coil for winding the inductor is determined according to thermal homogeneity or desired thermal gradient strategies;
- a plurality of coils (which are also simultaneously or independently rotating or not) wound on the internal shaft of the rotating cylinder, providing for the heating of the related rotating cylinder portion.

3. The system according to claim 1 or 2, wherein the system comprises cooling means selected from:
- cooling fluids, such as water or oil flowing in a gap of the rotating cylinder;
- convective motions of air, refrigerated or non-refrigerated, by suction and/or introduction into the rotating cylinder.

4. The system according to any one of claims 1 to 3, wherein the system is thermostated and wherein the temperature detection is carried out by pyrometers in contact with the surfaces to be thermostated, and/or IR temperature detectors for reading the surface temperature of the rotating cylinder or the internal shaft, and/or probes for reading the temperature of the air inside the cylinder or close thereto.

5. A rotating cylinder (1, 101, 201) comprising a system as defined in any one of claims 1 to 4.

6. The rotating cylinder (1, 101, 201) according to claim 5, comprising an external cylinder (2, 102) rotatably mounted, e.g. by means of ball bearings (10), to an internal shaft (3), which is fixed or rotating in turn, wherein a coil (5) is wound onto the internal shaft (3), the coil (5) being connected to an electric current source for creating the magnetic field by means of an RF generator.

7. The rotating cylinder (101) according to claim 5 or 6, wherein the external cylinder (102) comprises internal passages (6), which can form e.g. a serpentine, connected to a refrigerant fluid source.

8. The rotating cylinder (201) according to any one of claims 5 to 7, wherein the external cylinder (2) comprises lateral sides (11) comprising ball bearings (10) for coupling to the internal shaft (3), an annular gap (8) being placed between an internal surface (2a) of the external cylinder (2) and the internal shaft (3), and wherein openings (7) are present in the lateral sides (11), the openings (7) being connected to a suction means or a source of air, refrigerated or non-refrigerated for the extraction or intake of air into the gap (8), respectively.

9. A machine selected from a calender, a rewinding machine, and a plastic film stretching unit comprising one or more rotating cylinders as defined in any one of claims 5 to 8.
